# EUROPÄISCHE PATENTSCHRIFT

(11) **EP 1 934 085 B1**
(45) Veröffentlichungstag und Bekanntmachung des Hinweises auf die Patenterteilung: **05.05.2010**
(21) Anmeldenummer: 06792304.5
(22) Anmeldetag: 28.09.2006
(51) Int. Cl.: B62D 65/02

(54) **AUTOMATISCHE SCHRAUBEINRICHTUNG FÜR EIN CHASSIS EINES KRAFTFAHRZEUGS**
AUTOMATIC SCREWING DEVICE FOR THE CHASSIS OF A MOTOR VEHICLE
DISPOSITIF DE VISSAGE AUTOMATIQUE POUR UN CHASSIS D'UN VEHICULE AUTOMOBILE

(30) Priorität: 08.10.2005 DE 102005048278
(43) Veröffentlichungstag der Anmeldung: 25.06.2008
(73) Patentinhaber: GM Global Technology Operations, Inc., Detroit, MI 48265-3000 (US)
(72) Erfinder: CLIMENT, Salvador, E-50059 Zaragoza (ES); SABO, Franz, 64319 Pfungstadt (DE)
(74) Vertreter: Strauss, Peter
(86) Internationale Anmeldenummer: PCT/EP2006/009420
(87) Internationale Veröffentlichungsnummer: WO 2007/042149

(56) Entgegenhaltungen:
- DE-U1- 20 319 310
- US-A- 4 928 386
- US-A1- 2004 237 291

## Beschreibung

Die Erfindung betrifft eine Schraubstation für einen Hängeförderer mit Karosseriegehängen für jeweils eine Fahrzeugkarosserie und für eine Montageeinrichtung für in der Fahrzeugkarosserie zu montierende Chassiskomponenten gemäß den Merkmalen des Anspruchs 1.

Die US 4 086 522 zeigt einen Schweißroboter, der bei der sog. "Hochzeit" zur Verbindung eines Chassis mit einer Karosserie eingesetzt wird.

Die US 4 928 386 zeigt einen Fertigungsprozess zur Montage von Chassiskomponenten in eine Karosserie eines Kraftfahrzeugs, bei der die Chassisaggregate auf einer Montageplatte angeordnet sind. Bei der Montage bewegt sich die Montageplatte mit dem Chassis mit, die Chassisaggregate werden in ihre endgültige Position angehoben und dort verschraubt.

Die US 4 734 979 zeigt ein solches Verfahren, bei dem jeweils für den Bereich der Vorderachse und für den Bereich der Hinterachse eine separate Montageplatte vorgesehen ist, die am zum Transport der Karosserie verwendeten Hängeförderer ausgerichtet wird. Bei dieser Lösung sind die Schraubeinrichtungen nicht flexibel genug, um kurzfristig und kostengünstig erforderliche Produktänderungen des Kraftfahrzeuges als Änderungen in die Schraubeinrichtung einarbeiten zu können.

Die US 4 589 184 zeigt Schraubeinrichtungen zur Befestigung von Türen eines Kraftfahrzeugs, die auf Lineareinheiten montiert sind. Die Schraubeinrichtungen bewegen sich auf einem angetriebenen Schlitten neben der sich in der Fertigungsstrasse bewegenden Karosserie her. Während die Türen von sich gleichfalls mitbewegenden Manipulatoren in der Montageposition gehalten werden, werden die Befestigungsschrauben der Türen von den Schraubeinrichtungen angezogen.

In der JP 2001 120 6263 wird erläutert, wie eine Qualitätskontrolle bei der Montage von Kraftfahrzeugen bewerkstelligt werden kann.

Aus DE 203 19310 ist ein Verfahren zur Verschraubung von Chassisgeräten bzw. eine Schraubstation nach dem Oberbegriff des Anspruchs 1 bekannt.

Der Erfindung liegt die Aufgabe zugrunde, die Montage von Chassiskomponenten zu vereinfachen und flexibler zu gestalten, so dass mit derselben Schraubstation auch verschiedene Fahrzeugtypen hintereinander hergestellt werden können.

Diese Aufgabe wird durch den Gegenstand der unabhängigen Patentansprüche gelöst. Vorteilhafte Weiterbildungen ergeben sich aus den jeweiligen abhängigen Patentansprüchen.

Die Erfindung sieht eine Schraubstation für einen Hängeförderer mit Karosseriegehängen für jeweils eine Fahrzeugkarosserie und für eine Montageeinrichtung für in der Fahrzeugkarosserie zu montierende Chassiskomponenten vor.

Die Schraubstation hat ein Fahrwerk mit einer Schwimmplatte, wobei die Schwimmplatte wenigstens eine Schraubeinrichtung aufweist. Die Schraubeinrichtung gliedert sich in eine z-Lineareinrichtung, in eine x-Lineareinrichtung und in eine y-Lineareinrichtung sowie in eine oder mehrere Schraubspindeln.

Zur zeitweisen Verbindung und Referenzierung zwischen einem Karosseriegehänge und der Schwimmplatte bzw. zwischen einer Montageeinrichtung und der Schwimmplatte ist eine Zentrier-Adaptier-Verfahreinheit vorgesehen.

Die erfindungsgemäße Schraubstation für einen Hängeförderer mit Karosseriegehängen für eine Fahrzeugkarosserie hat dabei ein sich zeitweise mit einem Karosseriegehänge mitbewegendes Fahrwerk mit einer Schwimmplatte. Die Schwimmplatte kann eine Portalkonstruktion sowie eine oder mehrere Schraubeinrichtungen aufweisen.

Zur Referenzierung der Schwimmplatte mit dem Verband aus Karosseriegehänge und Montageplatte wird eine zeitweise Verbindung zwischen Schwimmplatte und Karosseriegehänge oder zwischen Schwimmplatte und Montageplatte hergestellt. In einer vorteilhaften Ausgestaltung wird zur zeitweisen Verbindung zwischen Schwimmplatte und Karosseriegehänge eine Hilfskonstruktion z.B. eine Portalkonstruktion eingesetzt.

Die Schwimmplatte weist wahlweise eine Hilfskonstruktion z. B. eine Portalkonstruktion zur Referenzierung der Schwimmplatte zum Karosseriegehänge oder zum Karosseriegehänge-fuß oder zu den Aufbauplatten bzw. Werkstückträger auf.

Die Schraubeinrichtung kann auch nach Bedarf einer Schraubspindelaufhängung aufweisen, welche ein Toleranzausgleich in x/y-Richtung erlaubt.

Zur zeitweisen Verbindung zwischen der Schwimmplatte und einem Karosseriegehänge oder den Aufbauplatten/Montagebock kann auch eine Hilfskonstruktion in Form einer Adaptiervorrichtung oder einer Portalkonstruktion eingesetzt werden.

Genau wie bei einem Verschrauben von Hand wird dabei ein hohes Maß an Flexibilität gewährleistet. Gegenüber dem Einsatz eines Manipulators wie in der US 4 589 184 brauchen keine zusätzlichen Aufstellflächen bereitgehalten werden. Dies ermöglicht eine Nachrüstung bestehender Fertigungsstraßen.

Die erfindungsgemäße Anlage kann im Fließbetrieb oder bei Stop-and-go arbeiten. Die Schraubspindeln der automatischen Schraubeinrichtung sind vorzugsweise an y-NC Lineareinheiten oder an Untereinheiten montiert. Die Schraubkoordinaten der Schraubstellen werden einprogrammiert, Schraubpunkte können kurzfristig zugefügt oder gelöscht werden.

Es können mehrere Schraubpunkte nacheinander mit der gleichen Schraubspindel angefahren werden. Außerdem ist eine hohe Flexibilität der Schraubeinrichtung bei Modelländerungen oder Modellwechsel gegeben. Dies ermöglicht kostengünstige Lösungen bei Modelländerungen, zusätzlichen Modellvarianten oder Modellwechsel.

Die Lineareinheiten für die automatischen Schraubeinrichtungen können auch in eine Qualitätskontrolle integriert werden.

Die Erfindung stellt eine vollautomatische Schraubeinrichtung und ein vollautomatisches Montageverfahren mit integrierter Qualitätskontrolle zur Befestigung von Chassisaggregaten mit einer Karosserie eines Kraftfahrzeuges in einem Fließprozess oder Stop-and-go-Prozess bereit. Dabei ist die vollautomatische Schraubeinrichtung mit mindestens einer Lineareinheit versehen und diese Lineareinheit ist mit mindestens einer Schraubspindel bestückt. Die Schraubpunktkoordinaten der Schraubstellen in der vollautomatischen Schraubeinrichtung sind frei programmierbar. Schraubkoordinaten von Schraubstellen können kurzfristig zugefügt, geändert, abgewählt oder gelöscht werden.

Mehrere Schraubpunkte können in der vorgegebenen Taktzeit mit der gleichen Lineareinheit nacheinander angefahren und verschraubt werden.

Entsprechend der Auswertung kann nach der automatischen Verschraubung eine Nachbearbeitung unmittelbar an den entsprechenden Fertigungsvorgang erfolgen. Diese kann die folgenden Schritte umfassen:
- Erfassen der Ist-Werte der Schraubverbindung zur Kontrolle und Dokumentation der Schraubverbindung als Qualitätssicherungsmaßnahme,
- Weitertransport der Karosserie mit den verbundenen Chassis-Aggregaten und
- Auswertung der erfassten Ist-Werte der Schraubverbindung durch einen Soll-Ist-Vergleich mit den vorgegebenen Schraubverbindungs-Soll-Daten als weitere Qualitätssicherungsmaßnahme.

Die vorliegende Erfindung betrifft weiterhin eine vollautomatische Verschraubungsstation zur Verschraubung von Chassisaggregaten an einer Karosserie eines Kraftfahrzeuges in einem Fließprozess oder Stop-and-go-Prozess. Zuvor wurden in der "Hochzeit" die folgenden Schritte ausgeführt:
- gleichzeitiges Zuführen der Chassisaggregate zu der im Fließprozess stetig bewegten Karosserie oder im Stop-and-go bewegten Karosserie eines Kraftfahrzeuges,
- Ausrichten der Chassisaggregate an der stetig bewegten Karosserie oder im Stop-and-go bewegten Karosserie.

Mit der Erfindung werden nachfolgend die folgenden Schritte durchgeführt:
- Verschrauben der Chassisaggregate mit der bewegten oder nicht bewegten Karosserie,
- Erfassen der Ist-Werte der Schraubverbindung zur Kontrolle und Dokumentation der Schraubverbindung als Qualitätssicherungsmaßnahme,
- Weitertransport der Karosserie mit den verbundenen Chassis-Aggregaten und
- Auswertung der erfassten Ist-Werte der Schraubverbindung durch einen Soll-Ist-Vergleich mit den vorgegebenen Schraubverbindungs-Soll-Daten als weitere Qualitätssicherungsmaßnahme.

Derartige Montageverfahren und Schraubeinrichtungen können in allen Serien- oder Massenproduktionsstätten, die modular aufgebaute Produkte in Fließprozessen oder Stop-and-go-Prozessen fertigen, insbesondere in der Automobilfertigung, eingesetzt werden.

Hierzu werden Basisteile und an dem Basisteil anzubringende Komponenten oder Aggregate zu einer Zusammenfügestelle transportiert, wo das Basisteil und die Komponenten mittels geeigneter Verbindungen oder Verbindungselemente zusammengefügt werden.

Beim Zuführen von Karosserie und Karosserieteilen über Fördereinrichtungen kann die Verbindung der Chassisaggregate mit der Karosserie manuell über entsprechend geschulte Bediener erfolgen, die die Chassisaggregate mit der Karosserie über zu betätigende Ausrichteinheiten zueinander ausrichten und dann manuell verbinden ("Hochzeit").

Zur maschinellen Verbindung von Karosserie und Karosserieteilen oder Chassisaggregaten kommen Schraubeinrichtungen zum Einsatz, bei denen keine Entkopplung der Chassisteile und der Karosserie aus dem Fließprozess mehr notwendig ist, damit die Chassisaggregate mit der Karosserie verbunden werden können. Nach erfolgter Befestigung von Chassisaggregaten und Karosserie braucht die Karosserie nicht wieder in den Fließprozess eingekoppelt werden. Eine Qualitätssicherung braucht nicht erst gegen Ende des Fließprozesses erfolgen, die Erfindung ermöglicht es, eine gegebenenfalls notwendige Nacharbeitung direkt an die Qualitätssicherung des Verschraubungsschritts anzuschließen.

Die Erfindung betrifft eine Anlage, die im Fließbetrieb oder bei Stop-and-go arbeitet. Die Schraubspindeln der automatischen Schraubeinrichtung sind an Lineareinheiten montiert, wie sie beispielsweise aus der US 4 589 184 bekannt sind. Die Schraubkoordinaten der Schraubstellen werden einprogrammiert. Schraubpunkte können kurzfristig zugefügt oder gelöscht werden. Es können mehrere Schraubpunkte nacheinander mit der gleichen Schraubspindel angefahren werden. Die Verwendung von Lineareinheiten ermöglicht eine kostengünstige Lösung der Problematik.

Mit dem Grundgedanken der Erfindung lässt sich eine maximale Flexibilität der automatischen Verschraubungen erreichen. Eine Beibehaltung der Fließfertigung mit einer gegebenen Peripherie-Bockband und Karosseriegehänge ist möglich.

Die Erfindung schafft eine vollautomatische Schraubeinrichtung, die sich durch höchste Flexibilität beim Anfahren der Schraubspindeln an die jeweiligen Schraubpunkte am Kraftfahrzeug auszeichnet. Diese Flexibilität ist gewünscht bei Modelländerungen, Modellwechsel, zusätzlichen Modellvarianten, wobei die Schraubkoordinaten der Schraubstellen in der Schraubeinrichtung frei einprogrammierbar sind. Die Erfindung arbeitet im Fließbetrieb oder bei Stop-and-go-Betrieb, wobei man bei der Befestigung von Chassisaggregaten und Karosserie während des Fließprozesses ohne Entkopplung und Stopp der Karosserie auskommt. Die Qualitätssicherung erfolgt in Realzeit während der Fließfertigung. Das Montageverfahren wird automatisch durchgeführt. Entsprechend der Auswertung erfolgt bei Fließprozess oder bei Stop-and-go-Prozess eine Nacharbeitung unmittelbar anschließend an den entsprechenden Fertigungsvorgang.

Die erfindungsgemäße Schraubverbindung ist anders als bei einer manuellen Verschraubung sehr selten fehlerhaft und stets mit der erforderlichen Sicherheit reproduzierbar. Wenn eine Fehlverschraubung auftritt, dann wird diese erkannt, solange es noch nicht zu einer kritischen Situation führt. Der automatische Schraubprozess wird während des Schraubvorgangs überwacht, und zwar auf Drehwinkel und Drehmomenttreue. Bei Abweichungen wird der Schraubprozess mit einer Warnmeldung unterbrochen. Dadurch wird sichergestellt, dass ein solches Auto nicht die Produktion verlässt.

Eine vorteilhafte Ausgestaltung der Erfindung sieht nach dem Ausrichten der Chassisaggregate zu der Karosserie vor, dass der Schritt Anfahren der Schraubspindeln mit programmierbaren Lineareinheiten an die Schraubpunkte die folgenden Schritte umfasst:
- Erkennen der Position und Lage der Karosserie bzw. des Karosseriegehänges oder
- Erkennen der Position und Lage des Aufbauplatten-Montagebockes,
- Start und Synchronfahrt einer Schraubeinrichtung mit einem Karosseriegehänge, Aufbauplatten-Montagebock und Erkennung der vorhandenen Einschraubsituation.

Frei programmierbare NC-Lineareinheiten ermöglichen eine maximale Flexibilität der Schraubeinrichtung. Schraubkoordinaten können auch von Schraubstellen kurzfristig zugefügt, geändert oder gelöscht werden. Mehrere Schraubpunkte können mit der gleichen Schraubspindel nacheinander angefahren und verschraubt werden.

Zu der Montagestation wird über einen als Hängeförderer ausgebildeten Stetigförderer oder Stop-and-go-Förderer eine Karosserie gefördert.

Ein zweiter Stetigförderer oder Stop-and-go-Förderer, der bodenseitig angeordnet ist, befördert einen Aufbauplatten-Montagebock, auf welchem Chassisaggregate angeordnet sind, die zuvorgehend in dem Bereich "Hochzeit" mit der Karosserie verbunden worden sind.

Dieser Aufbauplatten-Montagebock wird über eine Koppelvorrichtung mit der Karosserie verbunden, so dass Karosserie und Chassisaggregate gleich bewegt werden.

Die Karosserie wird dabei mittels eines Karosseriegehänges transportiert, welches wiederum von dem ersten Stetigförderer oder Stop-and-go-Förderer, der als Hängeförderer ausgebildet ist, bewegt wird.

Der Aufbauplatten-Montagebock hat einen Montagebock, auf dem sich Montageplatten zur Aufnahme der Chassisaggregate befinden. Diese Chassisaggregate sind zum Beispiel Hinterachse, Stoßdämpfer, Hinterfeder, Gelenkwelle bei Hinterradantrieb, Vorderachse, Federbeine, Lenksysteme, Schaltungssysteme, oder Motoren.

Die zu verschraubenden Chassisaggregate liegen zentriert aufgenommen auf den Montageplatten bzw. Aufbauplatten. Die Montageplatten sind schwimmend gelagert und lassen sich zu der Karosserie ausrichten.

Relativbewegungen zwischen Aufbauplatten-Montagebock und Karosserie werden durch eine Schwimmplattenkonstruktion ausgeglichen.

Über ausfahrbare Zentrierzylinder werden die Montageplatten am Fahrzeugunterbau in Zentrierbohrungen zentriert.

Hierbei wird der Fahrzeugunterbau hinten an den ausgefahrenen Zentrierzylindern der Aufbauplatte-Hinterachse automatisch am Gehängefuß hinten verriegelt.

Die Schrauben für die Chassisaggregate werden in einer Aufrüststrecke vormontiert.

Hierzu werden die Schrauben in Schraubköchern in den Schraubnüssen aufgenommen und bei der Vormontage durch die zu verschraubenden Chassisaggregate durchgesteckt.

Die Schraubnüsse sind auf Spindel-Schraubköcher aufgesteckt.

Die Schraubköcher für die senkrechten Schraubverbindungen sind auf der Vorder- und Hinterachsmontageplatte montiert.

Auf der linken und rechten Verfahreinheit der automatischen Schraubeinrichtung sind Lineareinheiten montiert, an denen Spindeln-Schraubeinrichtung montiert sind. Die anzufahrenden Schraubpunktkoordinaten X, Y, Z sind für die jeweiligen Lineareinheiten einprogrammiert.

Die Lineareinheiten der automatischen Schraubeinrichtung fahren die erforderlichen Schraubpunktkoordinaten an, Spindel-Schraubeinrichtungen docken gemäß der vorgegebenen Schraubpunktkoordinaten am Unterteil der Spindel-Schraubköcher an.

Die Spindeln der Schraubköcher sind schwimmend gelagert und können Toleranzabweichungen ausgleichen.

Die vollautomatische Schraubeinrichtung ist bodengeführt und fährt im Fließbetrieb gemäß Vorgaben vollautomatisch, synchron und parallel zu der zu verschraubenden Karosserie sowie zum Montagebock und dem Karosseriegehänge.

Die Mitfahrgeschwindigkeit der automatischen Schraubeinrichtung wird am Karosserieförderer abgegriffen. Über eine Lichtschranke wird der Startpunkt der automatischen Schraubeinrichtung erkannt beziehungsweise bestimmt.

Die vorliegende Erfindung betrifft eine vollautomatische Schraubeinrichtung und ein vollautomatisches Montageverfahren mit integrierter Qualitätskontrolle zur Befestigung von Chassisaggregaten mit einer Karosserie eines Kraftfahrzeuges in einem Fließprozess oder Stop-and-go-Prozess, wobei die vollautomatische Schraubeinrichtung mit mindestens einer Lineareinheit versehen ist und diese Lineareinheit mindestens mit einer Schraubspindel bestückt ist, wobei die Schraubpunktkoordinaten der Schraubstellen in der vollautomatischen Schraubeinrichtung frei programmierbar sind, sowie Schraubkoordinaten von Schraubstellen kurzfristig zugefügt, geändert, abgewählt oder gelöscht werden können.

Mehrere Schraubpunkte können in der vorgegebenen Taktzeit mit der gleichen Lineareinheit nacheinander angefahren und verschraubt werden.

Entsprechend der Auswertung erfolgt nach der automatischen Verschraubung eine Nachbearbeitung unmittelbar an den entsprechenden Fertigungsvorgang mit den folgenden Schritten:
- Erfassen der Ist-Werte der Schraubverbindung zur Kontrolle und Dokumentation der Schraubverbindung als Qualitätssicherungsmaßnahme und
- Weitertransport der Karosserie mit den verbundenen Chassis-Aggregaten.

Und Auswertung der erfassten Ist-Werte der Schraubverbindung durch einen Soll-Ist-Vergleich mit den vorgegebenen Schraubverbindungs-Soll-Daten als weitere Qualitätssicherungsmaßnahme.

Das Erfassen der Ist-Werte und/oder das Auswerten kann zu jedem Zeitpunkt nach erfolgter Montage ausgeführt werden.

Die Karosserie durchläuft nach der Verschraubung mit den Chassisaggregaten bei Abweichungen der Ist-Werte von den Sollvorgaben eine nachgeschaltete Nacharbeitsstation mit einer Qualitätskontrolle.

Der Schritt des gleichzeitigen Zuführens der Chassisaggregate zu der im Fließprozess stetig bewegten oder nicht bewegten Karosserie eines Kraftfahrzeuges kann die folgenden Schritte umfassen:
- Zuführen der Chassisaggregatemittel mittels mindestens eines Aufbauplatten-Montagebockes,
- Zuführen der Karosserie mittels Karosseriegehänge und
- Durchlaufen einer gemeinsamen Fertigungsstelle zur "Hochzeit" bzw. zum Zusammenfügen von Chassisaggregaten und Karosserie.

Der Prozessablauf der Erfindung umfasst folgende Schritte:
- Erkennen der Position und Lage der Karosserie bzw. des Karosseriegehänges,
- Erkennen der Position und Lage des Aufbauplatten-Montagebockes,
- Start der Synchronfahrt einer vollautomatischen Schraubeinrichtung mit Karosseriegehänge oder Aufbauplatte/Montagebock bzw. entsprechend der Fahrt der Karosserie, und
- Erkennung der vorhandenen Einschraubsituation.

Der Schritt des Verbindens der Chassisaggregate mit der Karosserie kann die folgenden Schritte umfassen:
- Einstellen der entsprechenden Schraubfallnummer,
- Andocken der Schraubeinrichtung an dem Aufbauplatten-Montagebock oder dem Karosseriegehänge/-fuß,
- automatisches maschinelles Verschrauben der Chassisaggregate mit der bewegten oder nicht bewegten Karosserie.

Der Schritt des Weitertransports der Karosserie mit den verbundenen Chassisaggregaten kann die folgenden Schritte umfassen:
- Abdocken der Schraubeinrichtung,
- Wegführen des Aufbauplatten-Montagebockes,
- Weitertransport der Karosserie und
- Anzeige der erfassten Ist-Werte der Verschraubung.

Der Schritt der Auswertung der erfassten Ist-Werte der Schraubverbindungen durch einen Soll-Ist-Vergleich mit den vorgegebenen Schraubverbindungs-Soll-Daten kann die folgenden Schritte umfassen:
- Soll-Ist-Vergleich der Einbausituation,
- Speichern der Auswertung und der erfassten Werte,
- Erstellung eines Berichtes über die Auswertung der Schraubverbindungsdaten und
- Weiterleitung der Daten.

Die erfindungsgemäße vollautomatische Schraubeinrichtung mit integrierter Qualitätskontrolle nach der Hochzeit in einem Fließbetrieb oder bei Stop-and-go-Betrieb zur Herstellung von Kraftfahrzeugen verfügt über Mittel zur Durchführung dieser Verfahrensschritte.

Die Mittel umfassen mindestens eine Lineareinheit und eine an dieser angebrachten Schraubspindel, wobei die Schraubpunktkoordinaten der Schraubstellen in der vollautomatischen Schraubeinrichtung frei programmierbar sind, sowie Schraubkoordinaten von Schraubstellen kurzfristig zugefügt, geändert, abgewählt oder gelöscht werden können.

Die.Mittel umfassen weiterhin mindestens einen Aufbau-Montagebock und mindestens einen Stetigförderer, um die Chassisaggregate gleichzeitig zu der im Fließprozess oder Stop-and-go-Prozess bewegten Karosserie zuzuführen.

Die Mittel umfassen noch mindestens eine Kopplungsvorrichtung, um die Chassisaggregate an der bewegten oder nicht bewegten Karosserie auszurichten.

Außerdem ist mindestens ein Sensor sowie eine Recheneinheit vorgesehen, um die Ist-Werte der Schraubverbindungen zu erfassen, diese zu kontrollieren und zu dokumentieren und somit die Qualität der Schraubverbindungen sichern.

Es ist ein als Karosseriegehänge ausgebildeter Stetigförderer oder Stop-and-go-Förderer vorgesehen, um die Karosserie zu fördern. Ein Regelkreis führt einen Soll-Ist-Vergleich der erfassten Ist-Werte der Schraubverbindung und der vorgegebenen Soll-Werte der Schraubverbindung durch.

Eine weiterhin vorgesehene Nacharbeitsstation ist mit der Schraubstation gekoppelt.

Es können Schraubverbindungen unterschiedlicher Schlüsselweiten und Drehmomenten mit einer Schraubeinheit bzw. Schraubspindel verschraubt werden, da die unterschiedlichen Schraubverbindungen mit separaten Schraubenköchern bzw. Zwischenspindeln auf den Montageplatten ausgestattet sind. Diese Schraubenköcher bzw. Zwischenspindeln besitzen an der Unterseite, d.h. an der Schnittstelle zur Schraubspindel, einen einheitlichen Kupplungsanschluss, z.B. 6-Kant, Torx, usw.

Bei unterschiedlichen Schlüsselweiten der Schraubverbindungen können je Verschraubungseinheit separate Schraubspindeln vorgesehen werden. Hierfür wird je Schraubverbindung eine Zwischenspindel an den Montageplatten vorgesehen. Es gibt dann also ein Magazin von mehreren Zwischenspindeln mit ggf. auch unterschiedlichen Schraubweiten. Von unten hat jede Zwischenspindel eine einheitliche Schlüsselweite. Wenn einfache vertikale Verschraubungen ausgeführt werden, dann brauchen keine zusätzlichen Spann- bzw. Gegenhaltevorrichtungen vorgesehen werden.

Für Spurstangen oder Querlenker können Spann- bzw. Gegenhaltevorrichtungen vorgesehen werden.

Die vorhandenen Systeme Fliessfertigung, Bockband, Montagebock und Montageplatten können leicht mit der Erfindung nachgerüstet werden, inklusive der dazwischen vorgesehenen Zwischenspindeln.

Die Erfindung zeigt vier Verschraubungseinheiten je Fahrzeugseite, wobei jede Verschraubungseinheit je eine oder mehrere EC-Schraubspindeln aufweisen kann. Nach Bedarf können auch mehr oder weniger Verschraubungseinheiten eingesetzt werden. Solche EC-Schraubspindeln werden beispielsweise von der Fa. Bosch-Rexroth angeboten. Innerhalb einer Taktzeit von 60 Sekunden soll jede der Schraubspindeln 3 bis 4 Verschraubungen vornehmen. Dadurch bleibt der bestehende Prozessablauf mit Peripherie-Schnittstellen unverändert.

Achsschenkel-Verschraubungen, wie Pendelstütze und Querlenker, können in andere Montagebereiche verlagert werden, weil diese zusätzliche Spann- und Gegenhaltevorrichtungen erfordern können. Die kann die Flexibilität der Erfindung erhöhen.

Die Erfindung bewährt sich besonders für senkrechte Verschraubungen. Für waagrechte oder schräge Verbindungen können zusätzlich zu den Linearführungen winkelig auslenkbare Stellglieder vorgesehen werden, beispielsweise Mini-Manipulatoren. Dies bewährt sich besonders für die Verschraubung von Stoßdämpfern. Zum Toleranzausgleich können die Schraubspindeln schwimmend gelagert werden.

Eine Lineareinheit gliedert sich in eine Führungseinheit und in eine Antriebseinheit.

Gemäß der Erfindung werden auch Vorrichtungen zum Toleranzausgleich vorgesehen. Für die Schwimmplatte ist in x-Richtung ein mittenzentrierter Toleranzausgleich bezüglich Bandgeschwindigkeit in x-Richtung vorgesehen, um sowohl die Fördergeschwindigkeiten der Förderer für die Karosserie-Gehänge und für die Montagebock/Aufbauplatten als auch Beschleunigungs- und Abbremsgeschwindigkeiten beider Förderer auszugleichen.

Darüber hinaus können die Schraubspindeln mit einer zusätzlichen Toleranzausgleich-Konstruktion ausgestattet werden.

Die Erfindung ist in der Zeichnung anhand eines Ausführungsbeispiels veranschaulicht.
- Fig. 1: zeigt eine schematische Ansicht der erfindungsgemäßen Verschraubungseinrichtung von vorne,
- Fig. 2: zeigt eine schematische Seitenansicht der Verschraubungseinrichtung aus Fig.1,
- Fig. 3: zeigt eine schematische Ansicht der Verschraubungseinrichtung aus Fig. 1 von oben,
- Fig. 4: zeigt ein Detail des Toleranzausgleichs bei einer Schwimmplatte der Verschraubungseinrichtung aus den Figuren 1 bis 3 und
- Fig. 5: zeigt ein Detail der Positionierung der Schwimmplatte mittels Portals bzw. Hilfseinrichtung zum Gehängefuß der Verschraubungseinrichtung aus den Figuren 1 bis 3.

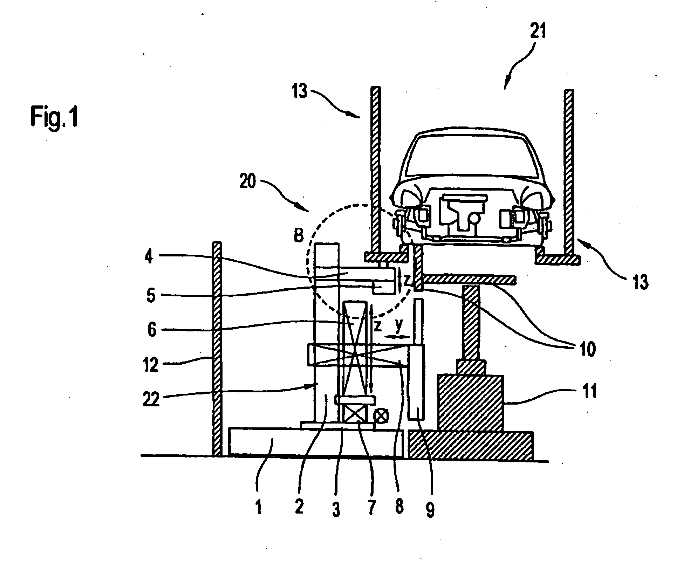

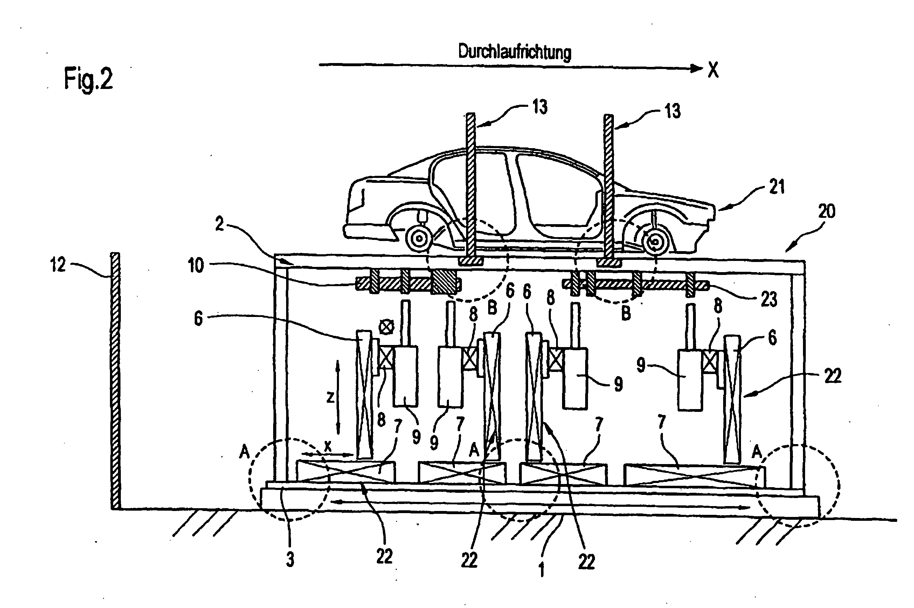

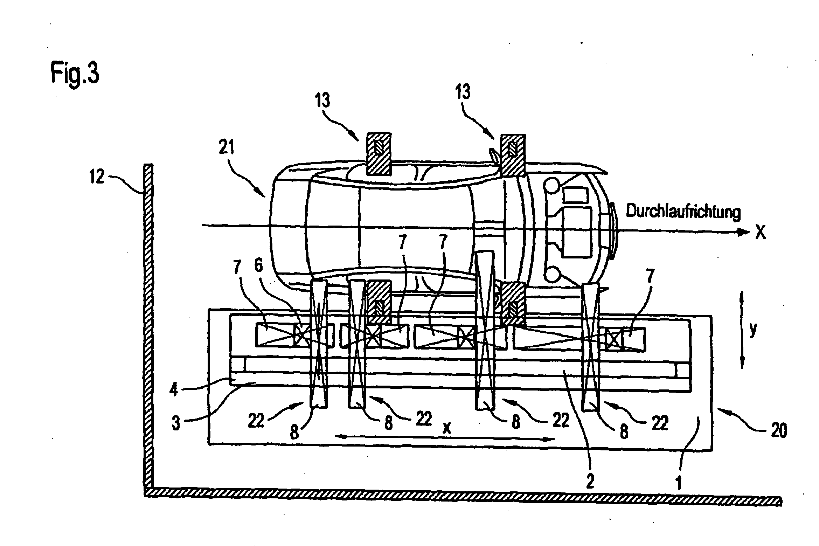

Die Figuren 1 bis 3 zeigen hinter einem Schutzgitter 12 eine erfindungsgemäße Schraubstation 20 in einer schematischen Darstellung. Die Schraubstation 20 ist im Bereich eines Hängeförderers angeordnet, von dem in dieser Ansicht nur zwei von zahlreichen Karosseriegehängen 13 zu sehen sind. Auf den Karosseriegehängen 13 ist eine Fahrzeugkarosserie 21 abgelegt, die im Hängeförderer zur Fertigstellung bewegt wird.

Die Schraubstation 20 gliedert sich in ein Fahrwerk 1, das hier durch einen nicht näher veranschaulichten Stetigförderer über den x-Verschraubungsweg gebildet ist. Innerhalb einer Fertigungsstation fährt die Schraubstation 20 mit einer Karosserie mit. Am Ende der Fertigungsstation fährt das Fahrwerk 1 mit der Schraubstation 20 wieder zurück an den Ausgangspunkt, um mit der nächsten Karosserie mitzufahren.

In einer nicht gezeigten Variante kann auch ein Stop-and-go-Förderer eingesetzt werden.

Auf dem Fahrwerk 1 ist eine Schwimmplatte 3 vorgesehen, die eine Portalkonstruktion 2, vier Schraubeinrichtungen 22, einen Montagebock 11 für die hier nicht gezeigten Chassiskomponenten der Hinterachse sowie einen weiteren, hier nicht gezeigten Montagebock für die hier nicht gezeigten Chassiskomponenten der Vorderachse trägt. Der Montagebock 11 greift dabei an einem hinteren Werkstückträger 10 an, auf dem die hier nicht gezeigten Chassiskomponenten der Hinterachse angeordnet sind. Der andere Montagebock greift an einem vorderen Werkstückträger 23 an, auf dem die hier nicht gezeigten Chassiskomponenten der Vorderachse angeordnet sind. Die Schwimmplatte 3 ist in x-Richtung und in y-Richtung beweglich.

In einem hier nicht gezeigten Ausführungsbeispiel sind der vordere Montagebock und der Montagebock 11 als Einheit ausgeführt, die zusammen bewegt wird.

Jede der Schraubeinrichtungen 22 gliedert sich in eine z-Lineareinrichtung 6 für Verschiebungen in Richtung der z-Achse, in eine x-Lineareinrichtung 7 für Verschiebungen in Richtung der x-Achse und in eine y-Lineareinrichtung 8 für Verschiebungen in Richtung der y-Achse. Je eine oder mehrere EC-Schraubspindeln 9 sind so an der y-Lineareinrichtung 8 angeordnet, dass sie nach oben zur Fahrzeugkarosserie 21 hin zeigt.

Zur Adaptierung bzw. Referenzierung zwischen dem Karosseriegehänge 13 und der Portalkonstruktion 2 bzw. der Schwimmplatte 3 ist eine Adaptier-Verfahreinheit 4 vorgesehen, die an einem Gehängefuß 24 des Karosseriegehänges 13 angreift. Zur Zentrierung zwischen dem Karosseriegehänge 13 und der Portalkonstruktion 2 bzw. der Schwimmplatte 3 greift eine Zentrier-Verfahreinheit 5 am Gehängefuß 24 an. Die Adaptierung und Zentrierung erfolgt auf an sich bekannte Weise.

In einem hier nicht gezeigten Ausführungsbeispiel ist eine Referenzierstangenkonstruktion vorgesehen, die wahlweise eine feste Verbindung oder einen Kontakt bzw. ein Referenzierung zwischen der Schwimmplatte 3 und einem Werkstückträger 10 herstellt.

Die Schwimmplatte 3 kann in einem weiteren hier nicht gezeigten Ausführungsbeispiel auch auf einem Aufbaugestell auf dem Fahrwerk 1 gelagert sein.

Die Chassis-Komponenten werden bei der "Hochzeit" in die Fahrzeugkarosserie 21 eingefahren. Die Chassis-Komponenten werden auf dem Werkstückträger 10 bzw. Montagebock 11 in Sequenz aufgelegt. Die Montageböcke 11 werden dabei durch einen Unterflurförderer kontinuierlich in einem umlaufenden "Oval" angetrieben.

Gleichzeitig wird die Fahrzeugkarosserie 21 im Bereich der Hochzeit in den Karosseriegehängen.synchron zu den Montageböcken 11 gefördert. Im Bereich der Hochzeit werden die Chassiskomponenten dann in die Fahrzeugkarosserie eingefahren, indem die Montageböcke die Werkstückträger anheben. Die Karosseriegehänge 13 werden dazu erkannt und die Schraubeinrichtungen 22 fahren synchron zum Karosseriegehänge 13. Die Schraubeinrichtungen 22 stehen dabei parallel zum Verband in Wartestellung.

Nach dem synchronen Anfahren der Schraubstation 20 wird die Schwimmplatte 3 zum Karosseriegehänge-/fuß oder den Montageplatten/Montagebock referenziert. In der Figur erfolgt die Referenzierung mit einer Hilfskonstruktion, nämlich mit der Portalkonstruktion 2 zum Gehängefuß. Danach werden die Lineareinheiten 6, 7, 8 nach innen zur Karosserie gefahren.

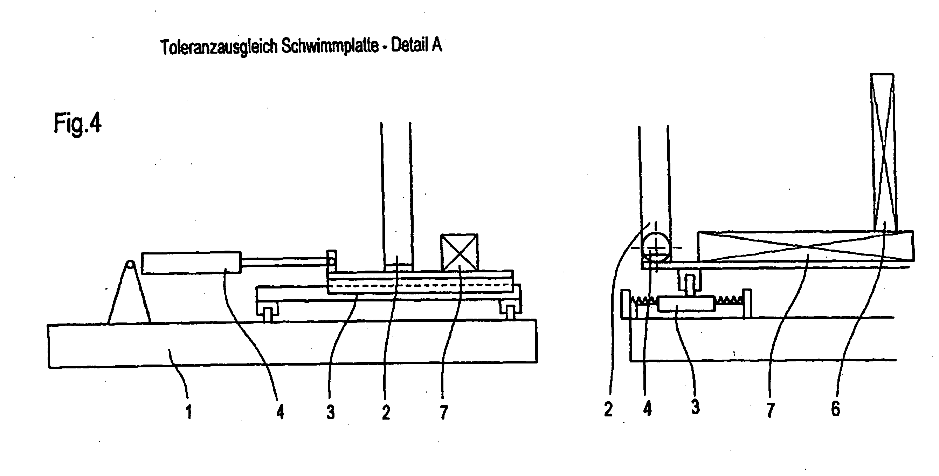

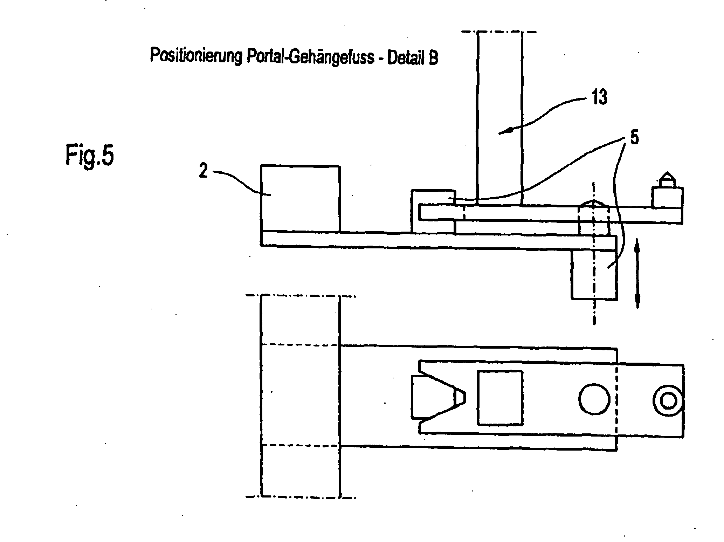

Zum Toleranzausgleich der Schwimmplatten gegenüber den Gehängefüßen 13 sind Führungseinheiten in x/y-Richtung vorgesehen, die für den Toleranzausgleich gegenüber den Gehängefüßen am besten in Figur 4 zu sehen sind. Die Schwimmplatte 3 erstreckt sich nach Bedarf über die ganze Länge der Fahrzeugkarosserie 21. Die Formgebung als Innenprisma des Gehängefußes 24 dient zur Vorpositionierung und als Anschlag der Schwimmplatte 3 bei Referenzierung an den Gehängefuß, wie in Figur 5 zu sehen ist. Dabei werden beide Gehängefüße 23 an beiden Seiten benutzt. Die genaue Ausrichtung der Schwimmplatte 3 erfolgt dann in den Aufnahmelöchern aller vier Gehängefüße 24, und zwar mittels Zentrierzylindern, wie in Figur 5 zu sehen ist.

Eine hier nicht dargestellte Referenzierung der Schwimmplatte kann auch zu den Montageplatten erfolgen.

Ein weiterer Toleranzausgleich in allen drei Raumrichtungen gegenüber den nicht dargestellten Zwischenspindeln an den Werkstückträgern kann die Aufhängung der Schraubspindeln übernehmen.

Die Befestigungsschrauben wurden zuvor im Aufrüstbereich in den dazu vorgesehenen Zwischenspindeln manuell eingelegt. Die Schraubeinrichtungen 22 führen dann die Schraubverbindungen automatisch aus.

Nach der Verschraubung wird die Referenzierung zwischen Schwimmplatte 3 zum Karosseriegehänge -/fuß 5 bzw. zur Montageplatte 10 wieder aufgehoben. Die Schraubstation 20 wird für die nächste Fahrzeugkarosserie vorbereitet.

Nicht dargestellt ist in Fig. 5 die dort durchgeführte Positionierung der Schwimmplatte zu den Montageplatten.

### Bezugszeichenliste

- 1: Fahrwerk
- 2: Portalkonstruktion
- 3: Schwimmplatte
- 4: Adapter-Verfahreinheit
- 5: Zentrier-Verfahreinheit
- 6: z-Lineareinrichtung
- 7: x-Lineareinrichtung
- 8: y-Lineareinrichtung
- 9: EC-Schraubspindel
- 10: hinterer Werkstückträger
- 11: Montagebock
- 12: Schutzgitter
- 13: Karosseriegehänge
- 20: Schraubstation
- 21: Fahrzeugkarosserie
- 22: Schraubeinrichtung
- 23: Gehängefuß
- 24: Gehängefuß

## Patentansprüche

1. Schraubstation (20) für einen Hängeförderer mit Karosseriegehängen (13) für jeweils eine Fahrzeugkarosserie (21) und für eine Montageeinrichtung (10, 11) für in der Fahrzeugkarosserie (21) zu montierende Chassiskomponenten, wobei die Schraubstation die folgenden Komponenten aufweist:
- ein Fahrwerk (1) mit einer Schwimmplatte (3), wobei
- die Schwimmplatte (3) weist wenigstens eine Schraubeinrichtung (22) auf,
- die Schraubeinrichtung (22) gliedert sich in eine z-Lineareinrichtung (6), in eine x-Lineareinrichtung (7) und in eine y-Lineareinrichtung (8) sowie in eine oder mehrere Schraubspindeln (9),
wobei zur zeitweisen Verbindung und Referenzierung zwischen einem Karosseriegehänge (13) und der Schwimmplatte (3) bzw. zwischen einer Montageeinrichtung (10, 11) und der Schwimmplatte (3) eine Zentrier-Adaptier-Verfahreinheit (4, 5) vorgesehen ist, **dadurch gekennzeichnet, daß** das Fahrwerk als in eine x-Richtung bewegbarer Stetigförderer ausgebildet ist.

2. Schraubstation nach Anspruch 1, **dadurch gekennzeichnet, dass** die Montageeinrichtung als Aufbauplatte (10) oder Montagebock (11) ausgebildet ist.

3. Schraubstation nach einem der vorhergehenden Ansprüche, **dadurch gekennzeichnet, dass** das Fahrwerk (1) als Teil eines synchron zum Hängeförderer laufenden Flurfördersystems ausgebildet ist.

4. Schraubstation nach einem der vorhergehenden Ansprüche, **dadurch gekennzeichnet, dass** die Schwimmplatte (3) längs und quer zur Förderrichtung beweglich ausgebildet ist.

5. Schraubstation nach einem der vorhergehenden Ansprüche, **dadurch gekennzeichnet, dass** die Zentrier-Adaptier-Verfahreinheit (4, 5) derart ausgebildet ist, dass sie an einem Gehängefuß des Karosseriegehänges (13) angreifen kann.

6. Schraubstation nach einem der vorhergehenden Ansprüche, **dadurch gekennzeichnet, dass** die Zentrier-Adaptier-Verfahreinheit (4, 5) derart ausgebildet ist, dass sie an einer Aufbauplatte (10) angreifen kann.

7. Schraubstation nach einem der vorhergehenden Ansprüche, **dadurch gekennzeichnet, dass** die Schraubspindel (9) so ausgebildet ist, dass eine Toleranz zwischen Schraubspindel (9) und Schraubachse ausgleichbar ist.

8. Schraubstation nach einem der vorhergehenden Ansprüche, **dadurch gekennzeichnet, dass** Schraubenköcher für eine manuelle Schraubenzufuhr über Zwischenspindeln auf einer Aufbauplatte (10) vorgesehen ist.

9. Schraubstation nach einem der Ansprüche 1 bis 7, **dadurch gekennzeichnet, dass** eine automatische Muttern- oder Schraubenzufuhr zur Schraubspindel (9) vorgesehen ist.

10. Verfahren zur Verschraubung von Chassisaggregaten an einer Karosserie eines Kraftfahrzeuges, das die folgenden Schritte aufweist:
- gleichzeitiges Zuführen der Chassisaggregate zu der im Fließprozess stetig bewegten Karosserie eines Kraftfahrzeuges;
- Ausrichten der Chassisaggregate an der stetig bewegten Karosserie;
- Verschrauben der Chassisaggregate mit der bewegten Karosserie mit Hilfe einer vollautomatischen Schraubeinrichtung mit mindestens einer Lineareinheit, die mit mindestens einer Schraubspindel bestückt ist;
- Erfassen der Ist-Werte der Schraubverbindung zur Kontrolle und Dokumentation der Schraubverbindung als Qualitätssicherungsmaßnahme;
- Weitertransport der Karosserie mit den verbundenen Chassis-Aggregaten und
- Auswertung der erfassten Ist-Werte der Schraubverbindung durch einen Soll-Ist-Vergleich mit den vorgegebenen Schraubverbindungs-Soll-Daten als weitere Qualitätssicherungsmaßnahme.

11. Verfahren nach Anspruch 10,
wobei der Schritt des gleichzeitigen Zuführens der Chassisaggregate zu der im Fließprozess stetig bewegten die folgenden Schritte umfasst:
- Zuführen der Chassisaggregate mittels mindestens eines Aufbauplatten-Montagebockes,
- Zuführen der Karosserie mittels eines als Karosseriegehänge ausgebildeten Hängeförderers und
- Durchlaufen einer gemeinsamen Fertigungsstelle zur "Hochzeit" bzw. zum Zusammenfügen von Chassisaggregaten und Karosserie.

12. Verfahren nach Anspruch 10 oder 11,
wobei das Verschrauben der Chassisaggregate mit der bewegten Karosserie das Anfahren der Schraubspindeln mit programmierbaren Lineareinheiten an Schraubpunkte mit folgenden Schritten umfasst:
- Erkennen der Position und Lage eines die Karosserie bewegenden Hängeförderers oder Erkennen der Position und Lage eines die Chassisaggregate bewegenden Aufbauplatten-Montagebockes,
- Start und Synchronfahrt einer Schraubeinrichtung (22) mit dem Hängeförderer und dem Aufbauplatten-Montagebock und
- Erkennung der vorhandenen Einschraubsituation.

13. Verfahren nach Anspruch 11 oder 12,
wobei der Schritt des Verschraubens der Chassisaggregate mit der Karosserie die folgenden Schritte umfasst:
- Einstellen der entsprechenden Schraubfallnummer,
- Andocken der Schraubeinrichtung an dem Aufbauplatten-Montagebock oder dem Karosseriegehänge/-fuß,
- automatisches maschinelles Verschrauben der Chassisaggregate mit der bewegten Karosserie.

14. Verfahren nach einem der Ansprüche 11 bis 13,
wobei der Schritt des Weitertransports der Karosserie mit den verschraubten Chassisaggregaten die folgenden Schritte umfasst:
- Abdocken der Schraubeinrichtung;
- Wegführen des Aufbauplatten-Montagebockes;
- Weitertransport der Karosserie und
- Anzeige der erfassten Ist-Werte der Verschraubung.

15. Verfahren nach einem der Ansprüche 10 bis 14,
wobei der Schritt der Auswertung der erfassten Ist-Werte der Schraubverbindungen durch einen Soll-Ist-Vergleich mit den vorgegebenen Schraubverbindungs-Soll-Daten die folgenden Schritte umfasst:
- Soll-Ist-Vergleich der Einbausituation;
- Speichern der Auswertung und der erfassten Werte;
- Erstellung eines Berichtes über die Auswertung der Schraubverbindungsdaten und
- Weiterleitung der Daten.

## Claims

1. A bolting station (20) for an overhead conveyor, comprising body suspensions (13) for a vehicle body (21) each and for a mounting device (10, 11)for body components to be mounted in the vehicle body (21), with the bolting station having the following components:
- a travel carriage (1) with a floating plate (3);
- the floating plate (3) comprises at least one bolting device (22);
- the bolting device (22) is subdivided into a z linear device (6), an x linear device (7) and a y linear device (8), and into one or several bolt spindles (9); with a centering/adapting displacement unit (4, 5) being provided for temporary connection and referencing between a body suspension (13) and the floating plate (3) or between a mounting device (10, 11) and the floating plate (3), **characterized in that** the travel carriage is arranged as a continuous conveyor which can be moved in the x-direction.

2. A bolting station according to claim 1, **characterized in that** the mounting device is arranged as a mounting plate (10) or mounting rack (11).

3. A bolting station according to one of the preceding claims, **characterized in that** the travel carriage (1) is arranged as a part of a ground conveyor system which runs synchronously to the overhead conveyor.

4. A bolting station according to one of the preceding claims, **characterized in that** the floating plate (3) is arranged to be movable along and transversally to the conveying direction.

5. A bolting station according to one of the preceding claims, **characterized in that** the centering/adapting displacement unit (4, 5) is arranged in such a way that it is able to act upon a suspension base of the body suspension (13).

6. A bolting station according to one of the preceding claims, **characterized in that** the centering/adapting displacement unit (4, 5) is arranged in such a way that it can act upon the floating plate (10).

7. A bolting station according to one of the preceding claims, **characterized in that** the bolt spindle (9) is arranged in such a way that a tolerance between bolt spindle (9) and the bolt axis can be compensated.

8. A bolting station according to one of the preceding claims, **characterized in that** a bolt hopper is provided for manual supply of bolts via intermediate spindles on a mounting plate (10).

9. A bolting station according to one of the claims 1 to 7, **characterized in that** an automatic supply of nuts or bolts to the bolt spindle (9) is provided.

10. A method for bolting together chassis units in a body of a motor vehicle, comprising the following steps:
- simultaneous supply of the chassis units to the body of a motor vehicle that is used continuously in the flowing process;
- alignment of the chassis units in the continually moved body;
- bolting the chassis units together with the moved body with the help of a fully automatic bolting device with at least one linear unit which is equipped with at least one bolt spindle;
- detection of the actual values of the bolted joint for checking and documenting the bolted joint as a measure of quality assurance;
- further conveyance of the body with the connected chassis units, and
- evaluation of the actual values of the bolted joint by a target/performance comparison with the predetermined setpoint data of the bolted joint as a further quality assurance measure.

11. A method according to claim 10, wherein the step of the simultaneous supply of the chassis units to the ones moved continually in the flow process comprises the following steps:
- supply of the chassis units by means of at least one mounting plate/mounting rack;
- supply of the body by means of an overhead conveyor arranged as a body suspension and
- passing through a common production point for "marriage" or for jointing chassis units and body.

12. A method according to claim 10 or 11, wherein the bolting of the chassis units together with the moved body comprises the starting of the bolt spindles with the programmable linear units at bolting points with the following steps:
- recognizing the position and location of an overhead conveyor moving the body or recognizing the position and location of a mounting plate/mounting rack moving the body units;
- starting and synchronous travel of a bolting device (22) with the overhead conveyor and the mounting plate/mounting rack, and
- recognition of the current bolt-in situation.

13. A method according to claim 11 or 12, wherein the step of bolting the chassis units together with the body comprises the following steps:
- setting the respective bolt drop number;
- docking the bolting device to the mounting plate/mounting rack or the body suspension/base;
- automatic mechanical bolting together of the chassis units with the moved body.

14. A method according to one of the claims 11 to 13, wherein the step of further conveyance of the body with the bolted chassis units comprises the following steps:
- undocking of the bolting device;
- moving the mounting plate/mounting rack away;
- further transport of the body, and
- display of the detected actual values of the bolted joint.

15. A method according to one of the claims 10 to 14, wherein the step of the evaluation of the actual values of the bolted joints by a target/performance comparison with the predetermined setpoint data of the bolted joint comprises the following steps:
- target/performance comparison of the mounting situation;
- saving the evaluation and the detected values;
- preparation of a report on the evaluation of the data on the bolted joint, and
- forwarding the data.

## Revendications

1. Poste de vissage (20) pour un transporteur suspendu avec des suspensions de carrosserie (13) pour une carrosserie de véhicule (21) à la fois et pour un dispositif de montage (10, 11) pour des composants de châssis à monter dans la carrosserie de véhicule (21), lequel poste de vissage comprend les composants suivants :
- un train de roulement (1) avec une plaque flottante (3),
- laquelle plaque flottante (3) présente au moins un dispositif de vissage (22),
- le dispositif de vissage (22) s'organise en un dispositif linéaire sur l'axe Z (6), un dispositif linéaire sur l'axe X (7) et un dispositif linéaire sur l'axe Y (8) ainsi qu'en une ou plusieurs broches de vissage (9),
dans lequel une unité de centrage, d'adaptation et de déplacement (4, 5) est prévue, pour la liaison transitoire et l'alignement, entre une suspension de carrosserie (13) et la plaque flottante (3) ou entre un dispositif de montage (10, 11) et la plaque flottante (3),
**caractérisé en ce que** le train de roulement est conçu comme un convoyeur continu mobile sur l'axe X.

2. Poste de vissage selon la revendication 1, **caractérisé en ce que** le dispositif de montage est conformé comme une plaque de montage (10) ou un chevalet de montage (11).

3. Poste de vissage selon l'une des revendications précédentes, **caractérisé en ce que** le train de roulement (1) est conformé comme une partie d'un système de convoyeur au sol fonctionnant de façon synchrone avec le convoyeur suspendu.

4. Poste de vissage selon l'une des revendications précédentes, **caractérisé en ce que** la plaque flottante (3) est conformée pour être mobile longitudinalement et transversalement par rapport au sens de transport.

5. Poste de vissage selon l'une des revendications précédentes, **caractérisé en ce que** l'unité de centrage, de déplacement et d'adaptation (4, 5) est conformée de telle façon qu'elle peut se mettre en prise sur un pied de suspension de la suspension de carrosserie (13).

6. Poste de vissage selon l'une des revendications précédentes, **caractérisé en ce que** l'unité de centrage, de déplacement et d'adaptation (4, 5) est conformée de telle façon qu'elle peut se mettre en prise sur une plaque de montage (10).

7. Poste de vissage selon l'une des revendications précédentes, **caractérisé en ce que** la broche de vissage (9) est conformée de telle façon qu'une tolérance entre la broche de vissage (9) et l'axe de vissage puisse être compensée.

8. Poste de vissage selon l'une des revendications précédentes, **caractérisé en ce qu'**un magasin de vis est prévu pour une alimentation manuelle en vis via des broches intermédiaires sur une plaque de montage (10).

9. Poste de vissage selon l'une des revendications 1 à 7, **caractérisé en ce qu'**une alimentation automatique en écrous ou en vis de la broche de vissage (9) est prévue.

10. Procédé pour le vissage de sous-ensembles de châssis sur une carrosserie d'un véhicule à moteur, comprenant les étapes suivantes :
- amenée simultanée des sous-ensembles de châssis vers la carrosserie d'un véhicule à moteur se déplaçant de façon continue dans la chaîne ;
- alignement des sous-ensembles de châssis sur la carrosserie en déplacement constant ;
- vissage des sous-ensembles de châssis sur la carrosserie en mouvement à l'aide d'un dispositif de vissage automatique avec au moins une unité linéaire qui est équipée d'au moins une broche de vissage ;
- saisie des valeurs réelles du vissage pour le contrôle et la documentation du vissage comme mesure d'assurance de la qualité ;
- poursuite du transport de la carrosserie avec les sous-ensembles de châssis vissés dessus ; et
- analyse des valeurs réelles saisies du vissage par comparaison réel-consigne avec les valeurs de consigne de vissage prédéfinies, comme autre mesure d'assurance de la qualité.

11. Procédé selon la revendication 10, dans lequel l'étape d'amenée simultanée des sous-ensembles de châssis vers la carrosserie d'un véhicule à moteur se déplaçant de façon continue dans la chaîne comprend les étapes suivantes :
- amenée des sous-ensembles de châssis au moyen d'un chevalet de montage à plaque de montage ;
- amenée de la carrosserie au moyen d'un convoyeur suspendu conformé comme une suspension de carrosserie ; et
- passage par un poste de fabrication commun pour « marier » ou assembler les sous-ensembles de châssis et la carrosserie.

12. Procédé selon la revendication 10 ou 11, dans lequel le vissage des sous-ensembles de châssis avec la carrosserie en mouvement comprend l'approche des broches de vissage avec des unités linéaires programmables vers les points de vissage avec les étapes suivantes :
- détection de la position et de la localisation d'un convoyeur suspendu déplaçant la carrosserie ou détection de la position et de la localisation d'un chevalet de montage à plaque de montage déplaçant les sous-ensembles de châssis ;
- démarrage et déplacement synchrone d'un dispositif de vissage (22) avec le convoyeur suspendu et le chevalet de montage à plaque de montage ; et
- détection de la situation de vissage existante.

13. Procédé selon là revendication 11 ou 12, dans lequel l'étape de vissage du sous-ensembles de châssis avec la carrosserie comprend les étapes suivantes :
- réglage du numéro de cas de vissage correspondant ;
- approche du dispositif de vissage vers le chevalet de montage à plaque de montage ou la suspension/le pied de suspension de carrosserie ;
- vissage automatique à la machine des sous-ensembles de châssis avec la carrosserie en mouvement.

14. Procédé selon l'une des revendications 11 à 13, dans lequel l'étape de poursuite du transport de la carrosserie avec les sous-ensembles de châssis vissés comprend les étapes suivantes :
- recul du dispositif de vissage ;
- éloignement du chevalet de montage à plaque de montage ;
- poursuite du transport de la carrosserie et
- affichage des valeurs réelles relevées pour le vissage.

15. Procédé selon l'une des revendications 10 à 14, dans lequel l'étape d'analyse des valeurs réelles relevées pour le vissage par une comparaison réel-consigne avec les données de consigne de vissage prédéfinies comprend les étapes suivantes :
- comparaison réel-consigne de la situation de montage ;
- enregistrement de l'analyse et des valeurs relevées ;
- établissement d'un rapport sur l'analyse des données de vissage et
- transmission des données.
